# EUROPEAN PATENT SPECIFICATION

(11) **EP 2 805 814 B1**
(45) Date of publication and mention of the grant of the patent: **15.01.2020**
(21) Application number: 14159934.0
(22) Date of filing: 14.03.2014
(51) Int. Cl.: B32B 7/00, B32B 7/02, B32B 7/10, B32B 27/00, B32B 27/06, B32B 27/08, B32B 27/30, B32B 27/32, B65D 65/38

(54) **High-slip stretch film**
Stark gleitende Dehnfolie
Film étirable à glissement élevé

(30) Priority: 14.03.2013 US 201361785480 P
(43) Date of publication of application: 26.11.2014
(73) Proprietor: Berry Plastics Corporation, Evansville, IN 47706-0959 (US)
(72) Inventor: KINNAN, Michael A., North Canton, OH 44720 (US); KITZMILLER, Brooke D., North Canton, OH 44720 (US)
(74) Representative: HGF Limited

(56) References cited:
- WO-A1-2006/043919
- CA-A1- 2 631 354
- US-A1- 2008 311 366
- US-A1- 2008 311 368
- US-A1- 2010 129 632

## Description

### BACKGROUND

The present disclosure relates to polymeric materials that can be formed into a multi-layer stretch wrap film. More particularly, the present disclosure relates to a stretch wrap film that can be used to hold goods to pallets during storage and/or shipping.

### SUMMARY

According to a first aspect of the invention, there is provided a multilayer stretch film, comprising: at least one slip layer comprising polyethylene and polystyrene; at least one core layer comprising at least one polyolefin; and at least one cling layer comprising at least one material selected from ultra-low density polyethylene, very low density polyethylene, plastomer, polyisobutylene, and linear low density polyethylene.

A multi-layer stretch film in accordance with the present disclosure, which film includes three or more layers, has at least one outer non-cling layer, at least one inner core layer, and at least one outer cling layer.

In illustrative embodiments, a multi-layer stretch film in accordance with the present disclosure has at least one first layer, which is an outer non-cling layer that includes a mixture of polyethylene and polystyrene, at least one second layer, which is a core layer that includes at least one polyolefin, and at least one third layer, which is an outer cling layer that includes a polymer selected from the group consisting of polyethylene, plastomer, polyisobutylene, and mixtures thereof.

In illustrative embodiments, a multi-layer stretch film in accordance with the present disclosure displays enhanced non-cling properties after being stretched, thereby permitting thick films requiring substantial stretching force to be stretched that would otherwise slip through stretching equipment without being stretched.

In illustrative embodiments, a multi-layer stretch film in accordance with the present disclosure has a non-cling surface, which surface generally does not cling to itself and prevents adjoining pallets wrapped therewith from sticking together, and an opposing cling surface, which surface enables the film to stick to itself.

In illustrative embodiments, a multi-layer stretch film in accordance with the present disclosure undergoes self-sealing when portions of the film are overlapped during the process of, for example, palletizing loads where it is desirable to securely hold or wrap an article(s) and/or hold goods to pallets during subsequent storage and shipping.

In illustrative embodiments, a multi-layer stretch film in accordance with the present disclosure optimizes physical properties thereby enabling such films to exhibit superior abrasion resistance in order to protect wrapped contents from damage and exposure during shipment, good cling in order to eliminate the need for taping of such films in order to secure the contents, and good non-cling in order to prevent adjoining film-wrapped pallets from sticking to one another.

### DETAILED DESCRIPTION

The present disclosure relates to stretch films with an optimized balance of beneficial properties. In particular, the stretch films of the present disclosure have a low coefficient of friction on their outer non-cling layer, thereby imparting superior non-cling properties, and superior abrasion resistance and cling properties, thereby rendering the films suitable for stretch-wrapping applications. Illustratively, the stretch films of the present disclosure preferably have three or more layers including, but not limited to, a core layer, an outer or skin cling layer and an outer or skin non-cling layer.

Illustrative embodiments of a multi-layer stretch film in accordance with the present disclosure having five or fewer layers may be represented by the construction A/B/C/D/E, wherein A is a cling layer, E is a non-cling layer, and B, C, and D, which may be the same or different polymer resins, are selected to optimize certain features of the core layer such as load containment, stretch, and puncture resistance while maintaining adequate tear propagation. An illustrative embodiment with three layers may be represented by the construction A/B/E, A/C/E, or A/D/E. An illustrative embodiment with seven layers may be represented by the construction A/B/C₁/C₂/C₃/D/E. Those skilled in the art will appreciate that various layer combinations and compositions are possible. For example, an illustrative film A/B/C₁/C₂/C₃/D/E may have five identical core layers, *i.e.,* B, C₁, C₂, C₃, and D are identical, or five different core layers, *i.e.,* B, C₁, C₂, C₃, and D are each different, or three identical core layers, *i.e.,* C₁, C₂, and C₃ are identical and B and D are each different, and so on and so forth. Alternatively, a seven layer film may have four core layers, B/C₁/C₂/C₃, and two adjoining non-cling layers, D/E, and a cling layer A.

The total thickness or gauge of a multi-layer stretch film in accordance with the present disclosure may vary depending on the intended application for the film. It will be appreciated by those skilled in the art that the thickness of each individual layer may be similar or different in addition to having similar or different compositions. The thickness of each layer is therefore independent and may vary within the parameters set by the total thickness of the film. Illustratively, a film having the construction A/B/C/D/E may preferably have corresponding percentage by weight thicknesses of 10/15/45/10/20 of the total thickness of the film. Alternatively, a film having the construction A/B/C/D/E may preferably have corresponding percentage by weight thicknesses of 10/10/60/10/10 of the total thickness of the film. Further, a film having the construction A/B/C/D/E may preferably have corresponding percentage by weight thicknesses of 5/10/50/10/25 of the total thickness of the film. The construction A/C/E may preferably have corresponding percentage thicknesses of 10/70/20. The construction A/B/C₁/C₂/C₃/D/E may preferably have corresponding thicknesses of 10/15/15/15/15/10/20. Those skilled in the art will appreciate that various layer combinations and thicknesses are possible.

The multi-layer stretch films in accordance with the present disclosure are typically manufactured by cast film or feed block co-extrusion. Alternatively, the stretch films of the present disclosure may be made by blown film (tubular) co-extrusion. Methods for cast film, feed block and blown film extrusion are disclosed in The Wiley Encyclopedia of Packaging Technology, Aaron L. Brody et al. eds., 2nd Ed. 1997, pp.233-38. Methods for film extrusion are also disclosed in U.S. Pat. No. 6,265,055.

In a first aspect of the disclosure, there is provided a multi-layer stretch film as defined herein.

In a further aspect of the disclosure, there is provided a use of a multi-layer stretch film as defined herein for wrapping a load.

Also described herein is a load, wrapped with a multi-layer stretch film as defined herein.

Also described herein is a process for preparing a wrapped load comprising applying a multi-layer stretch film as defined herein to the load.

In an illustrative aspect, the cling layer of the multi-layer stretch film of the present disclosure enables the film to cling to itself when the film is wrapped on a load. The cling layer preferably constitutes from about 5% to about 40% by weight of the total thickness of the film, more preferably from about 5-15%, and most preferably about 10%. The cling layer preferably contains one or more of ultra low density polyethylene (hereinafter "ULDPE"), very low density polyethylene, plastomer, polyisobutylene, linear low density polyethylene (hereinafter "LLDPE"), and mixtures or blends thereof. Due to the enhanced non-cling (*i.e.,* high-slip) properties of the non-cling layer in accordance with the present disclosure (see below), the cling layer preferably includes a ULDPE.

The cling layer may contain from about 1% to 100%, preferably 50% to 100%, more preferably from about 60%-90%, and most preferably from about 70%-80%, for example, about 80%, by weight of an ULDPE, which is also known as very low density polyethylene. ULDPE is ethylene copolymerized with at least one C₃-C₁₀ α-olefin, more preferably a C₈ α-olefin. The resulting ULDPE preferably has a density ranging from about 0.885 g/cm³ to about 0.920 g/cm³, more preferably from about 0.888 g/cm³ to about 0.910 g/cm³, and a melt index ranging from 1.0 g/10 min to 20 g/10 min, more preferably ranging from about 2 g/10 min to about 10 g/10 min. In a preferred embodiment, the cling layer contains about 80% of a ULDPE that is ethylene copolymerized with a C₈ α-olefin with a density of about 0.900g/cm³, and a melt index of about 5.

The cling layer may comprise LLDPE, for example in a quantity of about 0-40wt%, such as 10-30wt%, for example about 20%.

In an embodiment, the cling layer comprises ULDPE in a quantity of 60-100 wt% and LLDPE in a quantity of 0-40 wt%.

In another embodiment, the cling layer comprises ULDPE in a quantity of 70-90 wt% and LLDPE in a quantity of 10-30 wt%.

In another embodiment, the cling layer comprises ULDPE in a quantity of about 80 wt% and LLDPE in a quantity of about 20 wt%.

ULDPE can be produced by a variety of processes, including gas phase, solution and slurry polymerization as disclosed in The Wiley Encyclopedia of Packaging Technology, Aaron L. Brody et al. eds., 2nd Ed. 1997, pp. 748-50. ULDPE is typically manufactured using a Ziegler-Natta catalyst, although a number of other catalysts maybe used. For example, ULDPE may be manufactured with a metallocene catalyst. Alternatively, ULDPE maybe manufactured with a catalyst that is a hybrid of a metallocene catalyst and a Ziegler-Natta catalyst. Methods for manufacturing ULDPE are also disclosed in U.S. Pat. Nos. 5,399,426, 4,668,752, 3,058,963, 2,905,645, 2,862,917, and 2,699,457. The density of ULDPE is achieved by copolymerizing ethylene with a sufficient amount of one or more monomers. The monomers are preferably selected from 1-butene, 1-hexene, 4-methyl- 1-pentene and 1-octene.

The cling layer may also include a plastomer in a range from 0% to about 100% by weight of the cling layer, more preferably from about 70%-100%, and most preferably about 80%. The plastomer is preferably ethylene copolymerized with a C₃-C₁₀ α-olefin, having a density in the range from about 0.850 g/cm³ to about 0.900 g/cm³, more preferably of about 0.860 g/cm³ to about 0.880 g/cm³ for example, about 0.875g/cm³ , and a melt index of about 1.0 g/10 min to about 20.0 g/10 min, more preferably from about 2.0 to about 10.0 g/10 min, for example, about 3g/10min. The cling layer preferably contains about 70%-100% plastomer with a density of about 0.875g/cm³ and a melt index of about 3.0g/10 min. The plastomer is manufactured by the same process described above with reference to ULDPE, except that a higher amount by weight of one or more monomers is copolymerized with ethylene. In a preferred embodiment, the plastomer is ethylene copolymerized with a C₈ α-olefin, which has an unstretched cling of 250 g and a 200% stretched cling of 66 g as measured by ASTM D 4649. Cling is the strength required, in grams, to pull apart overlapping film along a test section.

In an embodiment, the cling layer may comprise 1-100 wt% of ULDPE and 0-100 wt% of a plastomer.

In another embodiment, the cling layer may comprise 50-100 wt% of ULDPE and 0-100 wt% of a plastomer.

In another embodiment, the cling layer may comprise 60-90 wt% of ULDPE and 0-100 wt% of a plastomer.

In another embodiment, the cling layer may comprise 70-80 wt% of ULDPE and 0-100 wt% of a plastomer.

In another embodiment, the cling layer may comprise about 80 wt% of ULDPE and about 0-100 wt% of a plastomer.

The wt% of the plastomer in the above embodiments may be as described above herein for the cling layer (0-100wt%, 70-100wt% such as about 80wt%).

The cling layer may comprise ULDPE, LLDPE and a plastomer, wherein ULDPE, LLDPE and a plastomer are present in the quantities described above for the cling layer in any suitable combination.

The multi-layer stretch films in accordance with the present disclosure include one or more core layers. The core layers or layer make up about 50% to about 90% by weight of the thickness of the film, more preferably from about 60-80%, and most preferably about 70% or 80% of the thickness of the film. Each core layer includes at least one polyolefin, for example, in a quantity of 1-100 wt%. Polyolefin in the core layer may for example, be selected from the group consisting of linear low density polyethylene, low density polyethylene, homopolymer polypropylene, copolymer polypropylene, random copolymer polypropylene and mixtures thereof. Illustratively, each core layer may include an LLDPE in an amount ranging from about 97% to 100% by weight of the core layer. Suitably, each core layer may include an LLDPE in an amount ranging from about 97% to about 99.9% by weight of the core layer. Alternatively, each core layer may include a blend of LLDPE and polypropylene. LLDPE is manufactured by the same processes discussed above in connection with ULDPE. For example, ethylene may be copolymerized using various catalysts such as a Ziegler-Natta catalyst or a metallocene catalyst, or a combination of the aforementioned catalysts. LLDPE has a higher density than ULDPE and plastomer because it is copolymerized with a lower concentration of co-monomer than ULDPE or plastomer.

The LLDPE used in either the cling layer or the core layer is ethylene copolymerized with one or more C₃-C₁₀ α-olefins (e.g. C₈ α-olefin), with a density ranging from about 0.900 g/cm³ to about 0.940 g/cm³, more preferably from about 0.910 g/cm³ to about 0.930 g/cm³, for example about 0.917 g/cm³, and a melt index ranging from about 1.0 to about 20.0 g/10 min., more preferably from about 1.5 to about 6.0 g/10 min, for example, 4.0g/10min. Similar to the ULDPE discussed above, LLDPE used in the films of the present disclosure is preferably ethylene copolymerized with one monomer of 1-butene, 1-hexene, 4-methyl-1-pentene, or 1-octene. LLDPE may alternatively contain more than one co-monomer selected from α-olefins such as 1-butene, 1-hexene, 4-methyl-1-pentene, and/or 1-octene. The core layer preferably contains about 97% to about 99.9% of LLDPE that is ethylene copolymerized with a C₈ α-olefin, with a density of 0.917 g/cm³ and a melt index of 4.0 g/10 min.

In one aspect, the core layer may be less than 3wt% low density polyethylene.

Illustratively, each core layer may include a blend of LLDPE and polypropylene. The polypropylene may be a homopolymer or may be the product of propylene copolymerization with a co-monomer, preferably ethylene. Alternatively, propylene maybe copolymerized with another co-monomer, such as a C₃-C₁₀ α-olefin. The polypropylene of the present disclosure may be a copolymer of propylene and ethylene, the ethylene content ranging from 0 to about 10% by weight of the copolymer, or from about 2% to about 6% by weight. An illustrative embodiment has propylene copolymerized with a mixture of α-olefins, the α-olefin content ranging from about 2% to about 4% by weight in a polymer known as random copolymer polypropylene. The random copolymer of polypropylene may have a density of about 0.905 g/cm³ and a melt flow rate of about 7.0 g/10 min. The method for measuring polypropylene melt flow rate is disclosed in The Wiley Encyclopedia of Packaging Technology (Aaron L. Brody et al. eds., 2nd Ed. 1997), p. 677 and methods for manufacturing polypropylene are disclosed in Kirk-Othmer Concise Encyclopedia of Chemical Technology pp. 1420-21 (Jacqueline I. Kroschwitz et al. eds., 4th Ed. 1999).

A core layer may include a blend of LLDPE and polypropylene, wherein the LLDPE and the polypropylene are as described above herein for the core layer. LLDPE may be present in a quantity described herein. Thus, for example:

In an embodiment, each core layer may include a blend of LLDPE and polypropylene, wherein the polypropylene is a copolymer of propylene and ethylene, the ethylene content of the copolymer being 0-10 wt%.

In another embodiment, each core layer may include a blend of LLDPE and polypropylene, wherein the polypropylene is a copolymer of propylene and ethylene, the ethylene content of the copolymer being 2-6 wt%.

In another embodiment, each core layer may include a blend of LLDPE and polypropylene, wherein the polypropylene is a copolymer of propylene and ethylene, the ethylene content of the copolymer being 2-4 wt%.

In another embodiment, each core layer may include a blend of LLDPE and polypropylene, wherein the polypropylene is a copolymer of propylene and a mixture of α-olefins, the α-olefin content of the copolymer being 2-4 wt%.The density ranges and melt indexes as disclosed herein for ULDPE and LLDPE and for plastomer and ULDPE partially overlap. However, these polymers may be further distinguished by crystallinity, measured as melt point. A ULDPE with the same melt index and density of LLDPE will have a lower melt point than LLDPE as disclosed herein. Similarly, a plastomer with the same density and melt index of a ULDPE, will have a lower melt point than ULDPE.

The multi-layer stretch films in accordance with the present disclosure further include a non-cling or slip layer that preferably makes up about 5-40% by weight of the total film thickness, more preferably from about 15-30%, and most preferably about 20%. A slip layer may make up about 10wt%, 20wt% or 25wt% of the total film thickness. The non-cling layer is composed of a mixture of polyethylene and polystyrene. The polyethylene-based non-cling layer may have a density ranging from about 0.890 g/cm³ to about 0.910 g/cm³, more preferably from about 0.895 g/cm³ to about 0.905 g/cm³ and a melt flow rate from about 2.0 g/10 min to about 40.0 g/10 min.

In an embodiment, the non-cling layer comprises 15-99 wt% of polyethylene. In another embodiment, the non-cling layer comprises 80-99 wt% of polyethylene.

Polyethylene in the non-cling layer may, for example, be selected from the group consisting of homopolymer polyethylene, copolymer polyethylene, and mixtures thereof. A slip layer may for example comprise homopolymer polyethylene in about 40-80wt%. A slip layer may for example, comprise copolymer polyethylene in about 15-60wt%. Thus, for example, a slip layer may comprise homopolymer polyethylene in about 40-80wt% and copolymer polyethylene in about 15-60wt%. A slip layer may additionally comprise polystyrene in about 1-25wt%.

In a preferred multilayer stretch film, the non-cling layer is preferably composed of from about 40-80% by weight of low density polyethylene (hereinafter "LDPE"). The non-cling layer may comprise from about 10-30% by weight of LLDPE. Preferably the non-cling layer comprises from about 40-80% by weight of LDPE and from about 10-30% by weight of LLDPE. The non-cling layer may additionally comprise from about 1%-25% by weight of polystyrene. In a preferred embodiment the non-cling layer comprises from about 40-80% by weight of LDPE, from about 10-30% by weight of LLDPE and from about 1%-25% by weight of polystyrene. In another preferred embodiment, the non-cling layer comprises from about 65-75% by weight of LDPE, from about 15-25% by weight of LLDPE and from about 5-15% by weight of polystyrene.

In one embodiment, the slip layer comprises about 70wt% of LDPE, about 20wt% of LLDPE and about 10wt% of polystyrene.

An unexpected feature of the multi-layer stretch films in accordance with the present disclosure is their display of enhanced non-cling properties (*i.e.,* exceptional slipperiness) after being stretched. More particularly, the stretch films described herein are not appreciably slippery until after they are stretched, thereby permitting thick films (*e.g.,* 0.0762 mm (3.0-mil) films) requiring substantial stretching force (*e.g.,* > 90.7 kg (200 lb)) to be stretched that would otherwise slip through stretching equipment (without being stretched) due to inherent pre-stretch slipperiness. Multi-layer stretch films known in the prior art that include polypropylene-based non-cling or slip layers display such inherent pre-stretch slipperiness, rather than enhanced post-stretch slipperiness.

Illustratively, the LDPE of the non-cling layer may have a density ranging from about 0.900 g/cm³ to about 0.940 g/cm³, more preferably from about 0.920 g/cm³ to about 0.930 g/cm³ and a melt index ranging from about 0.10 g/10 min to about 10.0 g/10 min, more preferably from about 0.3 g/10 min to about 0.7 g/10 min. LDPE is generally used for heavy bags, such as ice bags or shipping sacks, which normally have a thickness of from about 0.0381 mm (1.5 mil) to about 0.1016 mm (4.0 mil). A mil is a unit of distance equivalent to 0.001 inch (or 25.4 microns). As used in the non-cling layer, the LDPE may be ethylene homopolymer or ethylene copolymerized with one or more monomers, such as vinyl acetate, butyl acrylate, methyl acrylate, acrylic acid, ethyl acrylate, or a C₃-C₁₀ α-olefin. The LDPE is preferably ethylene homopolymer with a density of about 0.923 g/cm³ and a melt index of about 0.6-9.0 g/10 min. An alternative embodiment of the stretch film contains an LDPE that is a copolymer. Methods for manufacturing LDPE are disclosed in The Wiley Encyclopedia of Packaging Technology, Aaron L. Brody et al. eds., 2nd Ed. 1997, pp. 753-754, and in U.S. Pat. No. 5,399,426.

The non-cling layer may comprise polyethylene (homopolymer or copolymer or a mixture thereof) and polystyrene, for example, LDPE, LLDPE and polystyrene, in the quantities described above for the non-cling layer in any suitable combination, and wherein the LDPE is as described above for the non-cling layer. Thus for example:

In an embodiment, the non-cling layer comprises 40-80 wt% LDPE, 10-30 wt% LLDPE and 1-25 wt% polystyrene, wherein the LDPE is an ethylene homopolymer.

In an embodiment, the non-cling layer comprises 40-80 wt% LDPE, 10-30 wt% LLDPE and 1-25 wt% polystyrene, wherein the LDPE is a copolymer derived from the polymerisation of ethylene with one or more other monomers, such as vinyl acetate, butyl acrylate, methyl acrylate, acrylic acid, ethyl acrylate, or a C₃-C₁₀ α-olefin.

In an embodiment, the non-cling layer comprises 40-80 wt% LDPE, 10-30 wt% LLDPE and 1-25 wt% polystyrene, wherein the LDPE is an ethylene homopolymer with a density of about 0.923 g/cm³ and a melt index of about 0.6-9.0 g/10 min.

The amount of each polymer included in the multi-layer stretch films in accordance with the present disclosure is selected to create an optimal balance of several physical properties. The stretch films described herein balance increased load, holding containment and stretch with clarity, puncture resistance and resistance to tear propagation. The stretch films described herein have a non-cling layer that includes LLDPE in combination with a large amount (relatively speaking) of LDPE. LDPE typically provides good load containment, stretch and necked-in width. The amount of LDPE in the non-cling layer is a substantial percentage, however, *i.e.,* in the range of 40% to about 80%, which would be expected to reduce the film's puncture resistance, resistance to tear propagation and clarity. It is thus also unexpected that the multi-layer stretch films of the present disclosure optimize load containment and stretch, while also optimizing puncture resistance and clarity.

The overall thickness of the multi-layer stretch films in accordance with the present disclosure can be varied depending on the particular end use for which the film is manufactured. The stretch films of the present disclosure have a thickness that is generally in the range of typical thickness for stretch wrap films, but may be easily adjusted by one skilled in the art to fit the desired end use. It has been discovered that the greatest benefits from the balance of properties of the present disclosure are found in gauges ranging from about 0.01016 mm (40 gauge) to about 0.127 mm (500 gauge). Even more beneficial are the properties of the film of the present disclosure at gauges ranging from about 0.01524 mm (60 gauge) to about 0.0635 mm (250 gauge). At these gauge ranges, it has been discovered that the film performs better than prior art films. Therefore, the films of the present disclosure preferably have a thickness ranging from about 0.01016 mm (0.4 mils) to about 0.127 mm (5.0 mils) and more preferably from about 0.01524 mm (0.6 mils) to about 0.0635 mm (2.5 mils).

It will be appreciated by those skilled in the art that additives may be added to any of the film layers described herein in order to improve certain characteristics of the particular layer or to meet special requirements of specific applications. One or more additives may be added in amounts ranging from about 0%-99% by weight of the preferred first layer, second layer, third layer or other individual layer, more preferably from about 0-10% by weight, and most preferably from about 0.1-1.5% by weight. Preferred additives include color concentrates, slip agents, antiblocking agents, fillers, and specialty additives for specific applications.

A color concentrate maybe added to any of the film layers described herein in order to yield a colored layer, an opaque layer, or a translucent layer. Preferred color concentrates include color formulations including black, especially carbon black, white, and other colors suitable for agricultural films such as those manufactured by Ampacet Corporation (Tarrytown, NY). Preferred color concentrates include Ampacet® white UV PE masterbatch, the carrier resin of which being a LDPE having a melt index of 12 g/10 min at 190°C and a density of 0.916 gm/cm³ and the concentrate of which has a nominal specific gravity of 1.79, a melt index of 2-8 g/10 min at 190°C and a pigment composed of 65% TiO₂. Another preferred color concentrate includes Ampacet® black PE masterbatch, the carrier resin of which being a LLDPE having a nominal melt index of 20 g/10 min at 190°C and a density of 0.92 gm/cm³. The concentrate has a nominal specific gravity of 1.15, a melt index of < 6 g/10 min at 190°C, and a pigment composed of 40% carbon black. Another preferred color concentrate includes Ampacet® black UV PE masterbatch, the carrier resin of which being a LDPE or LLDPE having a nominal melt index of 24 g/10 min at 190°C and a density of 0.92 gm/cm³. The concentrate has a specific gravity of 1.14, a melt index of 4-10 gm/cm³ at 190°C, and contains about 40% carbon black. It will be appreciated by those skilled in the art that any suitable color concentrate may be used in order to satisfy particular requirements for a film being produced in accordance with the present disclosure.

Preferred slip agents include stearamide, oleamide, and erucamide. A particularly preferred slip agent is Ampacet® Slip PE masterbatch having a LDPE carrier resin with an 8 g/10 min melt index at 190°C and a density of 0.918 gm/cm³. The slip agent's concentrate has a nominal specific gravity of 0.92, a nominal melt index of 10-16 g/10 min and contains 5% erucamide. Slip agents may be used alone or in combination with antiblocking agents. A preferred slip/antiblock combination is Ampacet® Slip AB PE masterbatch having a LDPE carrier resin with an 8 g/10 min melt index at 190°C and a density of 0.92 gm/cm³. The slip agent's concentrate has a nominal specific gravity of 0.93, a nominal melt index of 5-14 g/10 min at 190°C and contains 2% slip agent and 2% antiblock. An antiblocking agent alone may also be added to a layer. Preferred antiblocking agents include organic polymers such as polyamides, polycarbonates, polyesters.

The following eight paragraphs describe the general composition of the multi-layer stretch film.

In an embodiment, the multi-layer stretch film contains a cling layer, a core layer, and a non-cling (slip) layer.

Suitably, the multi-layer stretch film contains a cling layer, at least one core layer, and a non-cling (slip) layer.

In an embodiment, the multi-layer stretch film contains a cling layer, three core layers, and at least one non-cling (slip) layer.

In another embodiment, the multi-layer stretch film contains a cling layer, three core layers, and a non-cling (slip) layer.

In another embodiment, the multi-layer stretch film contains a cling layer, five core layers, and a non-cling (slip) layer.

In an embodiment, the multi-layer stretch film contains a cling layer in a quantity of 5-40 wt%, at least one core layer in a quantity of 50-90 wt%, and at least one non-cling (slip) layer in a quantity of 5-40 wt%.

In another embodiment, the multi-layer stretch film contains a cling layer in a quantity of 5-15 wt%, at least one core layer in a quantity of 60-80 wt%, and at least one non-cling (slip) layer in a quantity of 15-30 wt%.

In another embodiment, the multi-layer stretch film contains a cling layer in a quantity of 5-15 wt%, at least one core layer in a quantity of 70-80 wt%, and at least one non-cling (slip) layer in a quantity of 10-20 wt%.

In another embodiment, the multi-layer stretch film contains a cling layer in a quantity of about 10 wt%, at least one core layer in a quantity of about 70 wt%, and at least one non-cling (slip) layer in a quantity of about 20 wt%.

It will be understood that the multi-layer stretch film may comprise a wt% of cling layer, core layer and slip layer as described herein in any suitable combination, wherein the components of each layer may be as described herein in any suitable combination, Thus, for example, any of the preferred features for a layer or the components of a layer described herein may suitably be combined with those for another layer in a film of the disclosure unless the context suggests otherwise. For example, a particular wt% for a cling layer may be combined with any suitable wt% for a non-cling layer. Also, for example, a particular wt% of a component in a layer may be combined with a preferred material for that component, unless the context suggests otherwise. Thus, for example, a particular wt% for ULDPE in a cling layer may be combined with a particular preferred ULDPE density in the cling layer.

The following twelve paragraphs describe the composition of the various layers forming the multi-layer stretch film:

In one embodiment, the multi-layer stretch film comprises:
a) at least one slip layer comprising polyethylene and polystyrene in respective quantities of 15-99 % and 1-25 % by weight of the slip layer;
b) at least one core layer comprising at least one polyolefin in a quantity of 1-100 % by weight of the core layer; and
c) at least one cling layer comprising a polymer selected from the group consisting of ultra-low density polyethylene, very low density polyethylene, plastomer, polyisobutylene, linear low density polyethylene, and mixtures thereof in a quantity of 1-100 % by weight of the cling layer.

In another embodiment, the multi-layer stretch film comprises:
a) at least one slip layer comprising polyethylene and polystyrene in respective quantities of 40-80 % and 1-25 % by weight of the slip layer;
b) at least one core layer comprising LLDPE in a quantity of 97-99.9 % by weight of the core layer; and
c) at least one cling layer comprising a polymer selected from the group consisting of ultra-low density polyethylene, very low density polyethylene, plastomer, polyisobutylene, linear low density polyethylene, and mixtures thereof in a quantity of 50-100 % by weight of the cling layer.

In another embodiment, the multi-layer stretch film comprises:
a) at least one slip layer comprising homopolymer polyethylene and polystyrene in respective quantities of 40-80 % and 1-25 % by weight of the slip layer;
b) at least one core layer comprising LLDPE in a quantity of 97-99.9 % by weight of the core layer; and
c) at least one cling layer comprising a polymer selected from the group consisting of ultra-low density polyethylene, very low density polyethylene, plastomer, polyisobutylene, linear low density polyethylene, and mixtures thereof in a quantity of 70-90 % by weight of the cling layer.

In another embodiment, the multi-layer stretch film comprises:
a) at least one slip layer comprising 40-80 % LDPE, 10-30 % LLDPE and 1-25 % polystyrene by weight of the slip layer, wherein the LDPE is an ethylene homopolymer;
b) at least one core layer comprising LLDPE in a quantity of 97-99.9 % by weight of the core layer; and
c) at least one cling layer comprising a polymer selected from the group consisting of ultra-low density polyethylene, very low density polyethylene, plastomer, polyisobutylene, linear low density polyethylene, and mixtures thereof in a quantity of 70-90 % by weight of the cling layer.

In another embodiment, the multi-layer stretch film comprises:
a) at least one slip layer comprising 40-80 % LDPE, 10-30 % LLDPE and 1-25 % polystyrene by weight of the slip layer, wherein the LDPE is an ethylene homopolymer with a density of about 0.923 g/cm³ and a melt index of about 0.6-9.0 g/10 min;
b) at least one core layer comprising LLDPE in a quantity of 97-99.9 % by weight of the core layer; and
c) at least one cling layer comprising a polymer selected from the group consisting of ultra-low density polyethylene, very low density polyethylene, plastomer, polyisobutylene, linear low density polyethylene, and mixtures thereof in a quantity of 70-90 % by weight of the cling layer.

In another embodiment, the multi-layer stretch film comprises:
a) at least one slip layer comprising 40-80 % LDPE, 10-30 % LLDPE and 1-25 % polystyrene by weight of the slip layer, wherein the LDPE is a copolymer derived from the polymerisation of ethylene with one or more other monomers, such as vinyl acetate, butyl acrylate, methyl acrylate, acrylic acid, ethyl acrylate, or a C₃-C₁₀ α-olefin;
b) at least one core layer comprising LLDPE in a quantity of 97-99.9 % by weight of the core layer; and
c) at least one cling layer comprising a polymer selected from the group consisting of ultra-low density polyethylene, very low density polyethylene, plastomer, polyisobutylene, linear low density polyethylene, and mixtures thereof in a quantity of 70-90 % by weight of the cling layer.

In another embodiment, the multi-layer stretch film comprises:
a) at least one slip layer comprising polyethylene and polystyrene in respective quantities of 40-80 % and 1-25 % by weight of the slip layer;
b) at least one core layer comprising a blend of LLDPE and polypropylene, wherein the polypropylene is a copolymer of propylene and ethylene, the ethylene content of the copolymer being 0-10 wt%; and
c) at least one cling layer comprising a polymer selected from the group consisting of ultra-low density polyethylene, very low density polyethylene, plastomer, polyisobutylene, linear low density polyethylene, and mixtures thereof in a quantity of 50-100 % by weight of the cling layer.

In another embodiment, the multi-layer stretch film comprises:
a) at least one slip layer comprising polyethylene and polystyrene in respective quantities of 40-80 % and 1-25 % by weight of the slip layer;
b) at least one core layer comprising a blend of LLDPE and polypropylene, wherein the polypropylene is a copolymer of propylene and ethylene, the ethylene content of the copolymer being 2-6 wt%; and
c) at least one cling layer comprising a polymer selected from the group consisting of ultra-low density polyethylene, very low density polyethylene, plastomer, polyisobutylene, linear low density polyethylene, and mixtures thereof in a quantity of 50-100 % by weight of the cling layer.

In another embodiment, the multi-layer stretch film comprises:
a) at least one slip layer comprising polyethylene and polystyrene in respective quantities of 40-80 % and 1-25 % by weight of the slip layer;
b) at least one core layer comprising LLDPE in a quantity of 97-99.9 % by weight of the core layer; and
c) at least one cling layer comprising ULDPE in a quantity of 60-100 % and LLDPE in a quantity of 0-40 % by weight of the cling layer.

In another embodiment, the multi-layer stretch film comprises:
a) at least one slip layer comprising polyethylene and polystyrene in respective quantities of 40-80 % and 1-25 % by weight of the slip layer;
b) at least one core layer comprising LLDPE in a quantity of 97-99.9 % by weight of the core layer; and
c) at least one cling layer comprising ULDPE in a quantity of 70-90 % and LLDPE in a quantity of 10-30 % by weight of the cling layer, and optionally including a plastomer.

In another embodiment, the multi-layer stretch film comprises:
a) at least one slip layer comprising LDPE, LLDPE and polystyrene in respective quantities of 65-75 %, 15-25 % and 5-15 % by weight of the slip layer;
b) at least one core layer comprising LLDPE and metallocene LLDPE in respective quantities of 30-40 % and 60-70 % by weight of the core layer; and
c) at least one cling layer comprising ULDPE in a quantity of 75-85 % and metallocene LLDPE in a quantity of 15-25 % by weight of the cling layer.

In another embodiment, the multi-layer stretch film comprises:
a) at least one slip layer comprising LDPE, LLDPE and polystyrene in respective quantities of 70 %, 20 % and 10 % by weight of the slip layer;
b) at least one core layer comprising LLDPE and metallocene LLDPE in respective quantities of 35 % and 65 % by weight of the core layer; and
c) at least one cling layer comprising ULDPE in a quantity of 80 % and metallocene LLDPE in a quantity of 20 % by weight of the cling layer.

Any layer of any multi-layer stretch compositions recited in the twelve foregoing paragraphs may additionally include at least one additive selected from the group consisting of color concentrates, slip agents, fillers, specialty additives, and anti-blocking agents in about 0%-99% by weight of the layer. Suitably, the at least one additive is present at a quantity of about 0%-10% by weight of the layer. More suitably, the at least one additive is present at a quantity of about 0.1%-1.5% by weight of the layer.

### EXAMPLES

### Comparative example 1

A multilayer stretch film having a total film thickness of about 0.0254 mm (1.0 mils) was produced using the formula set forth in Table 1 wherein layer A is the slip or non-cling layer, layer B is the core layer, and layer C is the cling layer.

**Table 1. Formulation 1.**

| **Layer** | **Ratio** | **Wt %** | **Type** | **Mfr** | **MFR** | **M1** | **Density** |
|---|---|---|---|---|---|---|---|
| **A** | **20%** | 60.0 | Homopolymer Polypropylene | Dow | 8.7 | | |
| | | 38.0 | Random Copolymer Polypropylene | Dow | 7.0 | | |
| | | 2.0 | Polystyrene | Dow | 1.5 | | |
| **B** | **70%** | 95.0 | LLDPE | Voridian | | 4 | 0.917 |
| | | 5.0 | LDPE | Dow | | 0.6 | 0.923 |
| **C** | **10%** | 100.0 | Plastomer | Dow | | 3.0 | 0.875 |

### Comparative example 2

A multilayer stretch film having a total film thickness of about 0.0508 mm (2.0 mils) is produced using the formula set forth in Table 2 wherein layer A is the slip or non-cling layer, layer B is the core layer, and layer C is the cling layer.

**Table 2. Formulation 2.**

| **Layer** | **Ratio** | **Wt %** | **Type** | **Mfr** | **MFR** | **MI** | **Density** |
|---|---|---|---|---|---|---|---|
| A | **20%** | 60.0 | Homopolymer Polypropylene | Dow | 8.7 | | |
| | | 38.0 | Random Copolymer Polypropylene | Dow | 7.0 | | |
| | | 2.0 | Polystyrene | Dow | 1.5 | | |
| **B** | **70%** | 95.0 | LLDPE | Voridian | | 4.0 | 0.917 |
| | | 5.0 | LDPE | Dow | | 0.6 | 0.923 |
| **C** | **10%** | 80.0 | Plastomer | Dow | | 3.0 | 0.875 |
| | | 20.0 | ULDPE | Dow | | 5.0 | 0.900 |

### Comparative example 3

A multilayer stretch film with superior cling and abrasion resistance was produced using the formula set forth in Table 3 wherein layer A is the slip or non-cling layer, layer B is the core layer, and layer C is the cling layer. The film produced by formula 3, and in particular the slip layer, had inferior non-cling properties (*i.e.,* slipperiness) compared to Formulae 1, 2, and 4.

**Table 3. Formulation 3.**

| **Layer** | **Ratio** | **Wt%** | **Type** | **Mfr** | **MFR** | **MI** | **Density** |
|---|---|---|---|---|---|---|---|
| **A** | **20%** | **100%** | **Random Copolymer Polypropylene** | | | | |
| **B** | **70%** | **95%** | **LLDPE** | **Voridian** | | **4.0** | **0.917** |
| | | **5%** | **LDPE** | **Dow** | | **0.6** | **0.923** |
| **C** | **10%** | **80%** | **Plastomer** | **Dow** | | **3.0** | **0.875** |
| | | **20%** | **ULDPE** | **Dow** | | **5.0** | **0.900** |

### Example 4

A multilayer stretch film with superior cling and abrasion resistance as well as enhanced post-stretch non-cling properties (*i.e.,* slipperiness) having a total film thickness of about 0.0254 mm (1.0 mils) is produced using the formula set forth in Table 4 wherein layer A is the slip or non-cling layer, layer B is the core layer, and layer C is the cling layer.

**Table 4. Formulation 4.**

| **Layer** | **Ratio** | **Wt%** | **Type** | **Mfr** | **MFR** | **MI** | **Density** |
|---|---|---|---|---|---|---|---|
| | | **69.5%** | **LDPE** | | | | |
| **A** | **15%** | **20%** | **LLDPE** | | | | |
| | | **10%** | **Polystyrene** | | | | |
| | | **0.5%** | **Masterbatch** | | | | |
| | | **65%** | **mLLDPE** | | | | |
| **B** | **75%** | **35%** | **LLDPE** | | | | |
| | | **79.5%** | **ULDPE** | | | | |
| **C** | **10%** | **20%** | **mLLDPE** | | | | |
| | | **0.5%** | **Masterbatch** | | | | |

### Comparative example 5

A multilayer stretch film was produced using the formula set forth in Table 5 wherein layer A is the slip or non-cling layer, layer B is the core layer, and layer C is the cling layer. The film produced by formula 5 machined well but had inferior abrasion resistance (no abrasion resistance).

**Table 5. Formulation 5.**

| **Layer** | **Ratio** | **Wt%** | **Type** | **Mfr** | **MFR** | **MI** | **Density** |
|---|---|---|---|---|---|---|---|
| **A** | **20%** | **100%** | **LDPE** | | | | |
| | | **95%** | **LLDPE** | **Voridian** | | **4.0** | **0.917** |
| **B** | **70%** | **5%** | **LDPE** | **Dow** | | **0.6** | **0.923** |
| | | **80%** | **Plastomer** | **Dow** | | **3.0** | **0.875** |
| **C** | **10%** | **20%** | **ULDPE** | **Dow** | | **5.0** | **0.900** |

The following numbered paragraphs define particular embodiments of the disclosure:
1. A multilayer stretch film, comprising:
   at least one slip layer comprising polyethylene and polystyrene;
   at least one core layer comprising at least one polyolefin; and
   at least one cling layer comprising ultra-low density polyethylene, very low density polyethylene, plastomer, polyisobutylene, linear low density polyethylene, or mixtures thereof.
2. The film of paragraph 1, wherein the slip layer comprises about polyethylene in about 15%-99% by weight of the slip layer.
3. The film of paragraph 2, wherein the polyethylene is homopolymer polyethylene, copolymer polyethylene, or mixtures thereof.
4. The film of paragraph 3, wherein the slip layer comprises homopolymer polyethylene in about 40%-80% by weight of the slip layer.
5. The film of paragraph 4, wherein the slip layer comprises copolymer polyethylene in about 15%-60% by weight of the slip layer.
6. The film of paragraph 5, wherein the slip layer comprises polystyrene in about 1%-25% by weight of the slip layer.
7. The film of paragraph 1, wherein the slip layer further comprises at least one additive selected from the group consisting of color concentrates, slip agents, fillers, specialty additives, and anti-blocking agents in about 0%-99% by weight of the slip layer.
8. The film of paragraph 1, wherein the polyolefin in the core layer is linear low density polyethylene, low density polyethylene, homopolymer polypropylene, copolymer polypropylene, random copolymer polypropylene, or mixtures thereof.
9. The film of paragraph 8, wherein the core layer comprises linear low density polyethylene in about 97%-100% by weight of the core layer.
10. The film of paragraph 8, wherein the core layer comprises low density polyethylene in less than about 3% by weight of the core layer.
11. The film of paragraph 1, wherein the core layer comprises at least one polyolefin in about 1%-100% by weight of the core layer.
12. The film of paragraph 11, wherein the core layer comprises a blend of polyethylene and polypropylene.
13. The film of paragraph 11, wherein the core layer further comprises at least one additive selected from the group consisting of color concentrates, slip agents, fillers, specialty additives, and anti-blocking agents in about 0%-99% by weight of the core layer.
14. The film of paragraph 1, wherein the cling layer comprises ultra-low density polyethylene in about 1 %-100% by weight of the cling layer.
15. The film of paragraph 14, wherein cling layer comprises ultra-low density polyethylene in about 80% by weight of the cling layer.
16. The film of paragraph 1, wherein the cling layer comprises plastomer in about 0%-100% by weight.
17. The film of paragraph 16, wherein the cling layer comprises plastomer in about 70%-100% by weight of the cling layer.
18. The film of paragraph 1, wherein the cling layer further comprises at least one additive selected from the group consisting of color concentrates, slip agents, anti-blocking agents, fillers, and specialty additives in about 0%-99% by weight of the cling layer.
19. The film of paragraph 1, wherein the film has a gauge of about 0.01016 mm (40 gauge) - 0.127 mm (500 gauge).
20. The film of paragraph 1, wherein the film has a gauge of about 0.01524 mm (60 gauge) - 0.0635 mm (250 gauge).
21. The film of paragraph 1, wherein the at least one slip layer is about 5%-40% by weight of the film.
22. The film of paragraph 1, wherein the at least one core layer is about 50%-90% by weight of the film.
23. The film of paragraph 1, wherein the at least one cling layer is about 5%-40% by weight of the film.
24. The film of paragraph 1, wherein the slip layer has non-cling properties.
25. The film of paragraph 1, wherein the cling layer has cling properties.
26. The film of paragraph 1, wherein a single core layer is disposed between a single first layer and a single third layer.
27. The film of paragraph 26, wherein the slip layer comprises low density polyethylene in about 70% by weight, linear low density polyethylene in about 20% by weight, and polystyrene in about 10% by weight.
28. The film of paragraph 27, wherein the core layer comprises linear low density polyethylene in about 100% by weight.
29. The film of paragraph 28, wherein the cling layer comprises ultra-low density polyethylene in about 80% by weight and linear low density polyethylene in about 20% by weight.
30. The film of paragraph 1, wherein the film has enhanced non-cling properties after being stretched.
31. The film of paragraph 1 comprising additional layers, wherein each additional layer comprises at least one polyolefin.
32. The film of paragraph 31, wherein the film has 5 layers or 7 layers.
33. A multilayer stretch film, comprising:
   at least one slip layer comprising about 70 wt% low density polyethylene, about 20 wt% linear low density polyethylene, and about 10 wt% polystyrene;
   at least one core layer comprising about 65 wt% metallocene linear low density polyethylene and about 35 wt% linear low density polyethylene; and
   at least one cling layer comprising about 80 wt% ultra-low density polyethylene and about 20 wt% metallocene linear low density polyethylene.

## Claims

1. A multilayer stretch film, comprising:
at least one slip layer comprising polyethylene and polystyrene;
at least one core layer comprising at least one polyolefin; and
at least one cling layer comprising at least one material selected from ultra-low density polyethylene, very low density polyethylene, plastomer, polyisobutylene, and linear low density polyethylene.

2. The multilayer stretch film of claim 1, wherein the slip layer comprises polyethylene in a quantity of 15-99% by weight of the slip layer.

3. The multilayer stretch film of claim 1 or 2, wherein the slip layer comprises polyethylene in a quantity of 80-99% by weight of the slip layer.

4. The multilayer stretch film of claim 1, 2 or 3, wherein the core layer comprises polyethylene in a quantity of 97-100% by weight of the core layer.

5. The multilayer stretch film of claim 4, wherein the polyethylene present in the core layer is linear low density polyethylene.

6. The multilayer stretch film of claim 5, wherein at least a portion of the linear low density polyethylene present in the core layer is metallocene linear low density polyethylene.

7. The multilayer stretch film of any preceding claim, wherein the cling layer comprises ultra-low density polyethylene and linear low density polyethylene.

8. The multilayer stretch film of claim 7, wherein the linear low density polyethylene present in the cling layer is metallocene linear low density polyethylene.

9. The multilayer stretch film of any preceding claim, wherein the cling layer comprises ultra-low density polyethylene in a quantity of 60-100% by weight of the cling layer, and linear low density polyethylene in a quantity of 0-40% by weight of the cling layer.

10. The multilayer stretch film of any preceding claim, wherein the slip layer comprises polystyrene in a quantity of 1-25% by weight of the slip layer.

11. The multilayer stretch film of any preceding claim, wherein the polyethylene present in the slip layer is at least one of low density polyethylene and linear low density polyethylene.

12. The multilayer stretch film of any preceding claim, wherein the slip layer comprises low density polyethylene in a quantity of 40-80% by weight of the slip layer, and linear low density polyethylene in a quantity of 10-30% by weight of the slip layer.

13. The multilayer stretch film of any preceding claim, wherein the film comprises
at least one slip layer in a total quantity of 5-40% by weight of the film;
at least one core layer in a total quantity of 50-90% by weight of the film; and
at least one cling layer in a total quantity of 5-40% by weight of the film.

14. The multilayer stretch film of any preceding claim, wherein the film comprises one slip layer, one core layer and one cling layer.

15. The multilayer stretch film of any preceding claim, wherein the film comprises
a slip layer in a total quantity of 10-20% by weight of the film, the slip layer comprising low density polyethylene in a quantity of 65-75% by weight of the slip layer, linear low density polyethylene in a quantity of 15-25% by weight of the slip layer, and polystyrene in a quantity of 5-15% by weight of the slip layer;
a core layer in a total quantity of 70-80% by weight of the film, the core layer comprising linear low density polyethylene in a quantity of 30-40% by weight of the core layer, and metallocene linear low density polyethylene in a quantity of 60-70% by weight of the core layer; and
a cling layer in a total quantity of 5-15% by weight of the film, the cling layer comprising ultra-low density polyethylene in a quantity of 75-85% by weight of the cling layer, and metallocene linear low density polyethylene in a quantity of 15-25% by weight of the cling layer.

## Patentansprüche

1. Mehrschichtstreckfolie, umfassend:
mindestens eine Gleitschicht, die Polyethylen und Polystyrol umfasst;
mindestens eine Kernschicht, die mindestens ein Polyolefin umfasst; und
mindestens eine Klebschicht, die mindestens ein Material umfasst, ausgewählt aus Polyethylen extrem niedriger Dichte, Polyethylen sehr niedriger Dichte, Plastomer, Polyisobutylen und Polyethylen mit linear niedriger Dichte.

2. Mehrschichtstreckfolie nach Anspruch 1, wobei die Gleitschicht Polyethylen in einer Menge von 15-99 Gew.-% der Gleitschicht umfasst.

3. Mehrschichtstreckfolie nach Anspruch 1 oder 2, wobei die Gleitschicht Polyethylen in einer Menge von 80-99 Gew.-% der Gleitschicht umfasst.

4. Mehrschichtstreckfolie nach Anspruch 1, 2 oder 3, wobei die Kernschicht Polyethylen in einer Menge von 97-100 Gew.-% der Kernschicht umfasst.

5. Mehrschichtstreckfolie nach Anspruch 4, wobei das in der Kernschicht vorhandene Polyethylen Polyethylen mit linear niedriger Dichte ist.

6. Mehrschichtstreckfolie nach Anspruch 5, wobei mindestens ein Abschnitt des in der Kernschicht vorhandenen Polyethylens mit linear niedriger Dichte Metallocen-Polyethylen mit linear niedriger Dichte ist.

7. Mehrschichtstreckfolie nach einem der vorstehenden Ansprüche, wobei die Klebschicht Polyethylen extrem niedriger Dichte und Polyethylen mit linear niedriger Dichte umfasst.

8. Mehrschichtstreckfolie nach Anspruch 7, wobei das in der Klebschicht vorhandene Polyethylen mit linear niedriger Dichte Metallocen-Polyethylen mit linear niedriger Dichte ist.

9. Mehrschichtstreckfolie nach einem der vorstehenden Ansprüche, wobei die Klebschicht Polyethylen extrem niedriger Dichte in einer Menge von 60-100 Gew.-% der Klebschicht und Polyethylen mit linear niedriger Dichte in einer Menge von 0-40 Gew.-% der Klebschicht umfasst.

10. Mehrschichtstreckfolie nach einem der vorstehenden Ansprüche, wobei die Gleitschicht Polystyrol in einer Menge von 1-25 Gew.-% der Gleitschicht umfasst.

11. Mehrschichtstreckfolie nach einem der vorstehenden Ansprüche, wobei das in der Gleitschicht vorhandene Polyethylen mindestens eines von Polyethylen niedriger Dichte und Polyethylen mit linear niedriger Dichte ist.

12. Mehrschichtstreckfolie nach einem der vorstehenden Ansprüche, wobei die Gleitschicht Polyethylen niedriger Dichte in einer Menge von 40-80 Gew.-% der Gleitschicht und Polyethylen mit linear niedriger Dichte in einer Menge von 10-30 Gew.-% der Gleitschicht umfasst.

13. Mehrschichtstreckfolie nach einem der vorstehenden Ansprüche, wobei die Folie mindestens eine Gleitschicht in einer Gesamtmenge von 5-40 Gew.-% der Folie; mindestens eine Kernschicht in einer Gesamtmenge von 50-90 Gew.-% der Folie; und mindestens eine Klebschicht in einer Gesamtmenge von 5-40 Gew.-% der Folie umfasst.

14. Mehrschichtstreckfolie nach einem der vorstehenden Ansprüche, wobei die Folie eine Gleitschicht, eine Kernschicht und eine Klebschicht umfasst.

15. Mehrschichtstreckfolie nach einem der vorstehenden Ansprüche, wobei die Folie
eine Gleitschicht in einer Gesamtmenge von 10-20 Gew.-% der Folie umfasst,
wobei die Gleitschicht Polyethylen niedriger Dichte in einer Menge von 65-75 Gew.-% der Gleitschicht, Polyethylen mit linear niedriger Dichte in einer Menge von 15-25 Gew.-% der Gleitschicht und Polystyrol in einer Menge von 5-15 Gew.-% der Gleitschicht umfasst;
eine Kernschicht in einer Gesamtmenge von 70-80 Gew.-% der Folie umfasst,
wobei die Kernschicht Polyethylen mit linear niedriger Dichte in einer Menge von 30-40 Gew.-% der Kernschicht und Metallocen-Polyethylen mit linear niedriger Dichte in einer Menge von 60-70 Gew.-% der Kernschicht umfasst; und
eine Klebschicht in einer Gesamtmenge von 5-15 Gew.-% der Folie umfasst,
wobei die Klebschicht Polyethylen extrem niedriger Dichte in einer Menge von 75-85 Gew.-% der Klebschicht und Metallocen-Polyethylen mit linear niedriger Dichte in einer Menge von 15-25 Gew.-% der Klebschicht umfasst.

## Revendications

1. Film étirable multicouche, comprenant :
au moins une couche antidérapante comprenant du polyéthylène et du polystyrène ;
au moins une couche intérieure comprenant au moins une polyoléfine ; et
au moins une couche d'adhérence comprenant au moins un matériau choisi parmi le polyéthylène ultra-basse densité, le polyéthylène de très basse densité, le plastomère, le polyisobutylène, et le polyéthylène basse densité linéaire.

2. Film étirable multicouche selon la revendication 1, dans lequel la couche antidérapante comprend du polyéthylène en une quantité comprise entre 15 et 99 % en poids de la couche antidérapante.

3. Film étirable multicouche selon la revendication 1 ou la revendication 2, dans lequel la couche antidérapante comprend du polyéthylène en une quantité comprise entre 80 et 99 % en poids de la couche antidérapante.

4. Film étirable multicouche selon l'une quelconque des revendications 1, 2 ou 3, dans lequel la couche intérieure comprend du polyéthylène en une quantité comprise entre 97 et 100 % en poids de la couche intérieure.

5. Film étirable multicouche selon la revendication 4, dans lequel le polyéthylène présent dans la couche intérieure est le polyéthylène basse densité linéaire.

6. Film étirable multicouche selon la revendication 5, dans lequel au moins une partie du polyéthylène basse densité linéaire présent dans la couche intérieure est le polyéthylène basse densité linéaire à catalyse métallocène.

7. Film étirable multicouche selon l'une quelconque des revendications précédentes, dans lequel la couche d'adhérence comprend du polyéthylène ultra-basse densité et du polyéthylène basse densité linéaire.

8. Film étirable multicouche selon la revendication 7, dans lequel le polyéthylène basse densité linéaire présent dans la couche d'adhérence est le polyéthylène basse densité linéaire à catalyse métallocène.

9. Film étirable multicouche selon l'une quelconque des revendications précédentes, dans lequel la couche d'adhérence comprend du polyéthylène ultra-basse densité en une quantité comprise entre 60 et 100 % en poids de la couche d'adhérence, et du polyéthylène basse densité linéaire en une quantité comprise entre 0 et 40 % en poids de la couche d'adhérence.

10. Film étirable multicouche selon l'une quelconque des revendications précédentes, dans lequel la couche antidérapante comprend du polystyrène en une quantité comprise entre 1 et 25 % en poids de la couche antidérapante.

11. Film étirable multicouche selon l'une quelconque des revendications précédentes, dans lequel le polyéthylène présent dans la couche antidérapante est au moins l'un parmi le polyéthylène basse densité et le polyéthylène basse densité linéaire.

12. Film étirable multicouche selon l'une quelconque des revendications précédentes, dans lequel la couche antidérapante comprend du polyéthylène basse densité en une quantité comprise entre 40 et 80 % en poids de la couche antidérapante, et du polyéthylène basse densité linéaire en une quantité comprise entre 10 et 30 % en poids de la couche antidérapante.

13. Film étirable multicouche selon l'une quelconque des revendications précédentes, dans lequel le film comprend
au moins une couche antidérapante en une quantité totale comprise entre 5 et 40 % en poids du film ; au moins une couche intérieure en une quantité totale comprise entre 50 et 90 % en poids du film ; et
au moins une couche d'adhérence en une quantité totale comprise entre 5 et 40 % en poids du film.

14. Film étirable multicouche selon l'une quelconque des revendications précédentes, dans lequel le film comprend une couche antidérapante, une couche intérieure et une couche d'adhérence.

15. Film étirable multicouche selon l'une quelconque des revendications précédentes, dans lequel le film comprend
une couche antidérapante en une quantité totale comprise entre 10 et 20 % en poids du film,
la couche antidérapante comprenant du polyéthylène basse densité en une quantité comprise entre 65 et 75 % en poids de la couche antidérapante, du polyéthylène basse densité linéaire en une quantité comprise entre 15 et 25 % en poids de la couche antidérapante, et du polystyrène en une quantité comprise entre 5 et 15 % en poids de la couche antidérapante ;
une couche intérieure en une quantité totale comprise entre 70 et 80 % en poids du film,
la couche intérieure comprenant du polyéthylène basse densité linéaire en une quantité comprise entre 30 et 40 % en poids de la couche intérieure, et du polyéthylène basse densité linéaire à catalyse métallocène en une quantité comprise entre 60 et 70 % en poids de la couche intérieure ; et
une couche d'adhérence en une quantité totale comprise entre 5 et 15 % en poids du film,
la couche d'adhérence comprenant du polyéthylène ultra-basse densité en une quantité comprise entre 75 et 85 % en poids de la couche d'adhérence, et du polyéthylène basse densité linéaire à catalyse métallocène en une quantité comprise entre 15 et 25 % en poids de la couche d'adhérence.
